# EUROPÄISCHE PATENTSCHRIFT

(11) **EP 2 602 278 B1**
(45) Veröffentlichungstag und Bekanntmachung des Hinweises auf die Patenterteilung: **07.01.2015**
(21) Anmeldenummer: 12194011.8
(22) Anmeldetag: 23.11.2012
(51) Int. Cl.: C08G 77/06, C08G 77/02

(54) **Herstellung hochmolekularer Siliconharze**
Production of high-molecular-weight silicone resins
Fabrication de résine de silicone hautement moléculaire

(30) Priorität: 07.12.2011 DE 102011087931
(43) Veröffentlichungstag der Anmeldung: 12.06.2013
(73) Patentinhaber: Wacker Chemie AG, 81737 München (DE)
(72) Erfinder: Sandmeyer, Frank, 84508 Burgkirchen (DE)
(74) Vertreter: Mieskes, Klaus Theoderich

(56) Entgegenhaltungen:
- EP-A2- 1 148 105
- DE-A1- 4 128 893

## Beschreibung

Die Erfindung betrifft ein Verfahren zur Herstellung von hochmolekularen Siliconharzen.

Verfahren zur Herstellung von Organopolysiloxanharzen sind aus zahlreichen Publikationen und Patentschriften bekannt. In der Regel wird bei den Synthesen von Chlor- oder Alkoxysilanen ausgegangen, die hydrolysiert und kondensiert werden. Um das Gelieren zu unlöslichen Produkten zu vermeiden, wird während der Synthese in der Regel ein Prozesslösemittel zugesetzt, das mit dem polaren wässrigen Milieu nicht mischbar ist. Dieses Lösemittel löst das entstehende Siliconharz in nicht wässriger Phase und entzieht es so dem Zugriff des Kondensationskatalysators und verhindert so die Gelbildung. Als ideale Prozesslösemittel haben sich dabei aromatische Lösemittel wie Toluol oder Xylol, das in technischer Qualität in der Regel Ethylbenzol enthält, erwiesen.

In diesem Zusammenhang sei verwiesen auf DE 1668172 A. Zur Synthese wird hier eine Mischung eines organischen Lösemittels mit einem Colösemittel eingesetzt, um eine homogene Hydrolysemischung zu erhalten, wobei das Prozesslösemittel vorzugsweise ein Aromat, insbesondere Toluol ist. Als Beispiel für ein Prozesslösemittel wird hier auch n-Butylacetat angegeben, wobei gemäß DE 1668172 A ein Colösemittel unerlässlich ist. Das Verfahren ist auf die Verwendung von Alkoxysilanausgangsmischungen beschränkt, die zu wenigstens 75 Molprozent aus CH₃SiO_{3/2}-Einheiten bestehen, wobei die Ausgangssilane sowohl Chlor- als auch Alkoxy- und Alkoxychlorsilane umfassen. Durch die Verwendung von chlorsilanhaltigen Gemischen in Gegenwart von Wasser stellen sich zwangsläufig Bedingungen ein, die zur Esterspaltung von n-Butylacetat führen, so dass im Laufe der Reaktion unvermeidlich Butanol entstünde, das mit den Chlorsilanen zu reaktionsträgen butoxyfunktionellen Siliconzwischenprodukten führen würde, was das Einschlafen der Kondensationsreaktion bei niedrigen Molekluargewichten bewirken könnte. Stabilisierende Butanolzusätze zu kondensationsfähigen Siliconharzzubereitungen sind genau zu diesem Zweck durchaus üblich. Hierzu sei beispielsweise auf Beispiel 20 in DE 4128893 A1 verwiesen, wo die Festgehaltseinstellung einer kondensationsfähigen Siloxanzubereitung mit Butanol vorgenommen wird und man so zu einem viskositätsstabilen Produkt gelangt. Man nutzt hier die allgemein bekannte Tatsache, dass eine Alkoxysilyl-Si-O-C-Bindung umso schwerer hydrolytisch spaltbar ist, je länger und/oder verzweigter der Alkylrest ist. In DE 4128893 A1 wird dieser Schritt zur Einstellung eines thermodynamischen Gleichgewichtszustandes genutzt, der die weitere Zugabe eines Stabilisators oder Inhibitors zur Einstellung der Lagerstabilität der erhaltenen Produkte überflüssig macht. Folglich ist in DE 1668172 A auch kein Ausführungsbeispiel mit n-Butylacetat als Prozesslösemittel enthalten.
Das Verfahren gemäß DE 1668172 A führt zu leicht zerbröckelnden Feststoffen mit einem Molekluargewicht Mw zwischen 1.000 und 3.500 g/mol, die für Beschichtungen und andere Flexibilität erfordernde Anwendungen naturgemäß nicht geeignet sind.

DE 854708 lehrt ein Verfahren zur Herstellung von Siliconharzen durch Chlorsilanalkoxylierung, Hydrolyse und Kondensation in einem Schritt, wobei als Prozesslösemittel ein aromatisches Lösemittel zugesetzt wird, weil dieses die Gelbildung zu unlöslichen Produkten zu verhindern hilft, die bei der erfindungsgemäßen Vorgehensweise von DE 854708 besonders groß ist.

DE 10 2005 047 395 A1 beschreibt ein mehrstufiges Verfahren zur Herstellung von Siliconharzen aus Chlorsilanen, bei dem in Wasser unlösliche organische Lösemittel eingesetzt werden, wobei in Wasser unlöslich bedeutet, dass bei 25°C und einem Druck von 900 - 1100 hPa weniger als 1 g Lösemittel in 100 g Wasser löslich sind. Die in DE 10 2005 047 395 A1 angegebenen Beispiele für solche Lösemittel stehen jedoch teilweise im Gegensatz zu dieser Bedingung, da auch Aceton und Methylethylketon als denkbare Lösemittel angegeben sind, die eine deutlich höhere Mischbarkeit, bzw. Löslichkeit in Wasser unter normalen Atmosphärenbedingungen aufweisen als 1g/100g Wasser. Methylethylketon besitzt beispielsweise eine Löslichkeit von 270g/l Wasser. In den Beispielen von DE 10 2005 047 395 A1 findet nur Toluol Verwendung, von dem durch DE 854708 als einzigem Lösemittel bekannt ist, dass es der Gelbildung durch unkontrollierte Kondensation während der Harzsynthese entgegenwirkt, so dass angesichts der widersprüchlichen Angaben in DE 10 2005 047 395 A1 die Verwendbarkeit nicht-aromatischen Lösemittels für die Synthese von Methyl- oder Methylphenylsiliconharzen anzuzweifeln ist.
DE 4128893 A1 beschreibt die Synthese von Beschichtungsmitteln auf Siliconharzbasis aus alkoxy- und silanolfunktionellen Siliconharzen, Silanen und Siloxanen in Gegenwart eines basischen Kondensationskatalysators und ggf. mit einem Lösemittel oder lösemittelfrei. Die lösemittelfreien Synthesen in dem aus dem Edukt abgespaltenen Alkohol liefern aufgrund der Gleichgewichtseinstellung zwischen Alkoxylierung und Hydrolyse keine hochmolekularen Siliconharze. Hochmolekulare Siliconharze werden gemäß DE 4128893 A1 nur mit Xylol als Prozesslösemittel erhalten.
Wie die Vergleichsbeispiele nahelegen, ist das Verfahren zur Herstellung hochmolekularer Siliconharze gemäß DE 4128893 A1 in den dort angegebenen Lösemitteln außer in Xylol nicht anwendbar.

Aromatische Lösemittel sind aus betrieblicher, Umwelt- und Gesundheitssicht bedenklich. Produkte, die in diesen Lösemitteln hergestellt werden, sind in einigen Anwendungen, wie beispielsweise in Körperpflegeprodukten oder in Beschichtungsmitteln nicht oder nur eingeschränkt einsetzbar.
Andererseits besitzen aromatische Lösemittel ausgezeichnete Eigenschaften als Prozesslösemittel für die Synthese von Siliconharzen. Insbesondere Toluol aber auch Xylol sind mit Wasser so gut wie nicht mischbar, lösen aber Siliconharze sehr gut. Während der Kondensation von alkoxy- oder hydroxyfunktionellen Siloxan und/oder Silanvorstufen können sie die sich bildenden Siliconharze daher aus der polaren Phase in die unpolare Lösemittelphase aufnehmen und sie vor übermäßiger Kondensation bis hin zur Vergelung schützen und gewährleisten so in vielen Verfahren erst die erfolgreiche Darstellung der Zielprodukte.
Abgesehen von Alkoholen können polare mindestens teilweise wassermischbare Lösemittel ggf. als Colösemittel eingesetzt werden, um erforderlichenfalls eine Homogenisierung der Reaktionsmischung zu erreichen oder den Phasentransfer zu erleichtern, was insbesondere bei chlorsilanhaltigen Ausgangsprodukten notwendig sein kann. In Gegenwart von Alkoholen bilden sich Gleichgewichte aus, die wie oben diskutiert die Bildung hoher Molekulargewichte verhindern.
Ansonsten gibt es keine Beispiele für Synthesen hochmolekularer, löslicher Siliconharze in polaren, mindestens teilweise wassermischbaren Lösemitteln als alleinigem Prozesslösemittel. Da die Eigenschaften der aromatischen Lösemittel in idealer Weise geeignet sind, um Siliconharzsynthesen durchzuführen, ist an sich nicht zu erwarten, dass dies möglich ist, denn gerade die Eigenschaft das sich bildende Siliconharz aus der Wasserphase zu herauszulösen, und es dadurch vor Vergelung zu schützen, geht in diesem Falle verloren. Die Beschränkung auf Aromaten als Prozesslösemittel schränkt jedoch die Anwendungsbreite von Siliconharzen und ihre Nutzbarkeit ein. Insbesondere trifft dies in den Bereichen Kosmetik, Körperpflege, Lebensmittel, Medizin und Bauindustrie zu, wo siliconharztypische Eigenschaften wie beispielsweise Außenbewitterungsstabilität, Langlebigkeit, ein gutes Hautgefühl oder Transferresistenz von großem Nutzen wären, jedoch wegen gesundheitlicher Bedenken gegenüber den verwendeten aromatischen Lösungsmitteln nicht oder nur beschränkt zum Einsatz kommen.

Die Aufgabe für die vorliegende Erfindung bestand daher darin ein Verfahren zur Herstellung hochmolekularer, zur Filmbildung befähigter Siliconharze zur Verfügung zu stellen, welches ohne aromatisches Lösemittel auskommt, ohne jedoch die oben diskutierten Nachteile zu zeigen, wie beispielsweise die Vergelung.

Diese Aufgabe wurde überraschenderweise gelöst durch das erfindungsgemäße Verfahren zur Herstellung von Siliconharzen mit einem Molekulargewicht ausgedrückt als Gewichtsmittel Mw von mindestens 5.000 g/mol und einer Polydispersität von höchstens 65, das dadurch gekennzeichnet ist, dass
(A) siliziumgebundenes alkoxygruppentragendes Siliconharzintermediat - oder siliziumgebundenes alkoxygruppen- und hydroxygruppentragendes Siliconharzintermediat oder deren Mischungen mit
(C) einem der Mischung Basizität oder Azidität verleihenden basischen oder sauren Katalysator oder sich nicht gegenseitig völlig neutralisierende Mischungen aus solchen Katalysatoren und
(D) Wasser und
(E) einem aliphatischen Carbonsäureester als alleinigem Prozesslösemittel hydrolysiert und kondensiert werden,
mit den Maßgaben, dass
I) der entstehende Alkohol aus dem Reaktionsgemisch abdestilliert wird, und
II) der Katalysator (C) inaktiviert wird durch thermische Behandlung oder durch Neutralisation über die Zugabe einer äquivalenten Menge Säure oder Base, und
III) ein Teil von (E) zur Viskositätseinstellung und Lösung des sich bildenden Siliconharzes im Endprodukt verbleibt.

In einer weiteren Ausführungsform des erfindungsgemäßen Verfahrens erfolgt die Umsetzung zusätzlich mit
(B) alkoxyfunktionellem Silan oder einer Mischung aus alkoxyfunktionellen Silanen oder einer Mischung mit deren Hydrolyse und/oder Kondensationsprodukten.

Das erfindungsgemäße Verfahren ermöglicht die Herstellung von Siliconharzen mit einem Mw von mindestens 5.000 g/mol, bevorzugt von mindestens 6.000 g/mol, besonders bevorzugt von mindestens 7.000 g/mol und insbesondere von mindestens 10.000 g/mol und einer Polydispersität von höchstens 65, vorzugsweise höchstens 50, besonders bevorzugt höchstens 30 und insbesondere höchstens 20.

Die Polydispersität PD ist der Quotient Mw/Mn aus gewichtsmittlerem Molekulargewicht Mw und zahlenmittlerem Molekulargewicht Mn. Die Bestimmung von Mn und Mw erfolgt mittels Size Exclusion Chromatography (SEC) gegen Polystyrol-Standard, in THF, bei 40°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl.

Überraschenderweise zeigt sich, dass aliphatische, mindestens teilweise mit Wasser mischbare Carbonsäureester (E) als alleiniges Prozesslösemittel geeignet sind solche hochmolekularen, lagerstabilen und zur Filmbildung befähigten Siliconharze herzustellen, ohne dass es zu einer Vergelung kommt.
Das heißt, dass bei dem erfindungsgemäßen Verfahren nicht nur keine aromatischen Lösemittel verwendet werden, sondern es wird auch auf die Verwendung von Lösemittelgemischen oder Colösemitteln verzichtet.

Falls die eingesetzten Prozesslösemittel (E) hinreichend hohe Siedepunkte haben oder ausreichend schwerflüchtig sind, kann die Zerstörung/Inaktivierung des Katalysators (C) gemäß II) thermisch erfolgen, also durch Ausheizen nach der Synthese. Falls die dazu erforderliche Temperatur zu hoch ist oder das Lösemittel (E) zu leicht flüchtig ist oder einen zu geringen Siedepunkt hat, kann die Inaktivierung des Katalysators (C) durch Neutralisation erfolgen.

Bevorzugt wird das Lösemittel (E) nach der Synthese unter Normaldruck abdestilliert, wobei ein Teil von (E) im Produkt verbleibt um somit die gewünschte Viskosität gemäß III) eingestellt wird. Es kann jedoch auch unter vermindertem Druck ausdestilliert werden.

Bevorzugt wird die Temperatur, die zur Zerstörung der eingesetzten Katalysatoren (C) erforderlich ist, nicht überschritten, sondern die Inaktivierung des Katalysators durch Neutralisation vorgenommen. Um ein vorzeitiges Gelieren der hochmolekularen Reaktionsprodukte zu vermeiden ist es vorteilhaft möglichst milde Bedingungen, also insbesondere möglichst niedrige Temperaturen bei der Aufarbeitung zu wählen. Die Temperatur, die zum Ausdestillieren des Lösemittels (E) und des gebildeten Prozessalkohols gemäß III) und I) gewählt wird, ist jedoch bevorzugt mindestens 80°C.

Die erfindungsgemäßen Siliconharzintermediate (A) sind aus Wiederholungseinheiten der Formel (1) aufgebaut:

RₓSi(OR¹)_{y}O_{(4-x-y)/2} (1)

wobei R gleiche oder verschiedene einwertige, gegebenenfalls substituierte über SiC-gebundene C₁-C₂₀ Kohlenwasserstoffreste bedeutet,
R¹ gleiche oder verschiedene einwertige C₁-C₆-Alkylreste oder Wasserstoff bedeutet,
x und y die Werte 0, 1, 2 oder 3 haben können,
mit der Maßgabe, dass
x in mindestens 30%, vorzugsweise in mindestens 40% und besonders bevorzugt in mindestens 50% aller Wiederholungseinheiten der Formel (1) den Wert 1 besitzt und den Wert 1 auch in 100% aller Wiederholungseinheiten der Formel (1) haben kann, und x über alle Wiederholungseinheiten der Formel(1) gemittelt durchschnittlich einen Wert von 0,9 bis 1,9, bevorzugt von 0,95 bis 1,9 und besonders bevorzugt einen Wert von 1,0 bis 1,8 besitzt und,
wobei x = 1 und x = 2 besonders bevorzugt Werte für x in den Wiederholungseinheiten der Formel (1) sind,
y über alle Wiederholungseinheiten der allgemeinen Formel (1) gemittelt einen durchschnittlichen Wert von 0,1 bis 1,8, vorzugsweise von 0,15 bis 1,6 und besonders bevorzugt von 0,20 bis 1,5 besitzt,
wobei in den Siliconharzintermediaten aus Wiederholungseinheiten der Formel (1) die Einheit OR¹ zu höchstens 10 Gew.%, bevorzugt höchstens 8 Gew.%, besonders bevorzugt höchstens 5 Gew.% insbesondere höchstens 3 Gew.% Hydroxygruppen bedeutet. Silanolgruppen müssen in den Siliconintermediaten aus Wiederholungseinheiten der Formel (1) nicht per se vorhanden sein. Sie entstehen während der Reaktion durch Hydrolyse der notwendigerweise vorhandenen Alkoxygruppen.

Die Siliconharzintermediate (A) aus Wiederholungseinheiten der Formel (1) besitzen Mw im Bereich von 600 bis 2.500 g/mol mit einer Polydispersität von höchstens 5. Sie sind flüssig, wobei ihre Viskositäten im Bereich von 80 bis 600 mPas , bevorzugt von 85 - 550 mPas und besonders bevorzugt von 90 bis 500 mPas bei 25°C und Normdruck liegen.

Die Viskösitätsbestimmung gemäß der vorliegenden Erfindung erfolgt nach DIN 51562-1. Die Bestimmung der zugehörigen Dichte erfolgt nach DIN 51757.

Die erfindungsgemäß einsetzbaren alkoxyfunktionellen Silane oder Silangemische (B) sind solche der allgemeinen Formel (2)

R²ₐSi(OR³)_{b} (2)

wobei R² unabhängig von R die Bedeutung von R haben kann,
R³ unabhängig von R¹ einen Rest der Art wie für R¹ angegeben bedeutet,
a eine Zahl mit dem Wert 0, 1, 2, oder 3 bedeutet,
b eine Zahl im Wert von 4 - a bedeutet
und für a in einem Gemisch verschiedener Silane der Formel (2) über alle Silane gemittelt die gleichen Wertebereiche bevorzugt sind wie sie für x als bevorzugt angegeben sind.

In einer bevorzugten Form wird das Verfahren in Abwesenheit von (B) ausgeführt, indem als Ausgangsprodukte nur die Siliconharzintermediate (A) aus Wiederholungseinheiten der Formel (1) mit einem basischen oder einem sauren Katalysator (C) und Wasser (D) und in (E) als alleiniges Lösungsmittel zur Reaktion gebracht wird.

In einer weiteren bevorzugten Ausführungsform wird ein basischer Katalysator (C) eingesetzt.

Ausgewählte Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Alkenylreste wie der Vinylrest, Arylreste, wie der Phenyl-, Naphthyl-, Anthryl- und Phenanthrylrest, Alkarylreste, wie Tolylreste, Xylylreste und Ethylphenylreste, und Aralkylreste, wie der Benzylrest, der α-und der ß-Phenylethylrest, wobei diese Aufzählung nicht limitierend zu verstehen ist.

Bei Rest R handelt es sich bevorzugt um unsubstituierte Kohlenwasserstoffreste mit 1 bis 12 Kohlenstoffatomen, besonders bevorzugt um den Methyl-, Ethyl- und n-Propylrest und Phenylrest, insbesondere um den Methyl-, n-Propyl- und Phenylrest.

Beispiele für Kohlenwasserstoffrest R¹ sind die für R angegebenen Reste, wobei es sich bei Rest R¹ bevorzugt um ein Wasserstoffrest oder Kohlenwasserstoffreste mit 1 bis 6 Kohlenstoffatomen, besonders bevorzugt um einen Wasserstoffrest, den Methyl- oder Ethylrest handelt, wobei diese Aufzählung nicht limitierend zu verstehen ist.

Beispiele für als basische Katalysatoren (C) einsetzbare Basen sind Hydroxide, Methanolate, Ethanolate, und Isopropanolate, Ammoniak, Amine, Alkali- und Erdalkalihydroxide, Carbonate und Hydrogencarbonate der Alkali- und Erdalkalimetalle, Silanolate und Siliconate der Alkalimetalle, Ammonium- und Phosphoniumhydroxide bzw. deren Silanolate und Ammonium- und Phosphoniumalkoxide. Bevorzugt wird als basischer Katalysator (C) oder als Teil der Komponente (C) (wenn (C) aus einer Mischung besteht) ein basischer Kondensationskatalysator eingesetzt, der bei 0,1 MPa Druck und Temperaturen von bis zu 600°C siedet, sublimiert oder sich unter Verlust seiner basischen Eigenschaften zersetzt.

Als (C) sind insbesondere quarternäre Ammonium- und/oder Phosphoniumverbindungen geeignet, speziell solche der Formeln (3) und (4) :

R⁴₄NOR⁵ (3)

R⁶₄POR⁷ (4)

wobei R⁴ und R⁶ unabhängig von R dieselbe Bedeutung wie R haben und R⁵ und R⁷ unabhängig von R¹ dieselbe Bedeutung wie R¹ haben.

Als Verbindungen der Formeln (3) und (4) sind insbesondere die Tetra(C₁ bis C₁₈-Kohlenwasserstoff)ammoniumhydroxide und die Tetra(C₁ bis C₁₈-Kohlenwasserstoff)phosphoniumhydroxide bevorzugt, wobei die Kohlenwasserstoffreste insbesondere Alkyl-, Aryl-, Alkaryl- und Aralkylreste sind. Besonders bevorzugt sind die Tetra(C₁ bis C₁₂-Kohlenwasserstoff)ammoniumhydroxide und die Tetra(C₁ bis C₁₈-Kohlenwasserstoff)phosphoniumhydroxide und/oder deren Silanolate. Letztere werden hergestellt durch Umsetzung der quartären Ammonium- und Phosphoniumhydroxide mit Organosilanen oder Organosiloxanen.

Besonders bevorzugt ist Benzyltrimethylammoniumhydroxid, welches sich bei 0,1 MPa und 130°C in Benzylalkohol und gasförmiges Trimethylamin zersetzt. Ebenfalls bevorzugt ist Tetramethylammoniumhydroxid. Ebenfalls besonders bevorzugt ist Tetran-butylphosphoniumhydroxid, welches sich bei 0,1 MPa und 150°C zu Tri-n-butylphosphinoxid und Butan zersetzt, wobei letzteres gasförmig entweichen kann.

Die basischen Katalysatoren (C) werden in Mengen von 100 ppm bis 1 Gew.-% bevorzugt kleiner als 0,5 Gew.-% bezogen auf das gesamte Gewicht des Siliconharzintermediates (A) eingesetzt, wobei gasförmige oder feste Katalysatoren als alkoholische oder als wässrige Lösung zur Reaktionsmasse zugegeben werden. Die Konzentration dieser wässrigen oder alkoholischen Lösungen beträgt 5 - 75%, vorzugsweise 10 - 50%, insbesondere 40%. Besonders bevorzugt sind 40%-ige methanolische oder ethanolische Lösungen von Benzyltrimethylammoniumhydroxid.

Beispiele für als saure Katalysatoren (C) einsetzbare Säuren sind vorzugsweise Mineralsäuren wie Salzsäure, Salpetersäure oder Phosphorsäure, wobei Salzsäure besonders bevorzugt ist, Polysäuren wie Polyphosphorsäure, Polyacrylsäure und Polyvinylschwefelsäure oder es können auch vorzugsweise Carbonsäuren wie Ameisensäure, Essigsäure, Propionsäure, Oxalsäure, Malonsäure, Bernsteinsäure, Adipinsäure, Benzoesäure, Phthalsäure, Zitronensäure verwendet werden. Die sauren Katalysatoren (C) werden in Mengen von 1 ppm bis 1 Gew.-% bevorzugt kleiner als 0,1 Gew.-% bezogen auf das gesamte Gewicht des Siliconharzintermediates (A) eingesetzt, wobei gasförmige saure Katalysatoren wie Salzsäuregas HCl oder feste saure Katalysatoren als wässrige Lösung zur Reaktionsmasse zugegeben werden. Die Konzentration dieser wässrigen Lösungen beträgt 5 - 35%, vorzugsweise 10 - 30%, insbesondere 25%. Besonders bevorzugt sind 25%-ige wässrige Lösungen von Salzsäure.

Aliphatische Carbonsäureester (E) sind solche der Formel (5)

R⁸C(=O)OR⁹ (5)

wobei R⁸ gleiche oder verschiedene einwertige lineare oder verzweigte C₁-C₃₀-Alkylreste, C₁-C₃₀-Alkenylreste oder Wasserstoff bedeutet, wobei nicht benachbarte Kohlenstoffatome in den C₁-C₃₀-Alkylresten durch Sauerstoffatome ersetzt sein können,
und R⁹ unabhängig von R⁸ die gleiche Bedeutung wie R⁸ hat, mit der Einschränkung, dass R⁹ kein Wasserstoffatom bedeuten kann.

Typische aber nicht einschränkende Beispiele für aliphatische Carbonsäureester (E) sind Methyl-, Ethyl-, n-Propyl-, iso-Propyl-, n-Butyl-, Isobutyl-, tert.-Butylester, Methoxymethyl-, Methoxyethyl-, Methoxypropyl-, Methoxybutyl-, Ethoxymethyl-, Ethoxyethyl-, Ethoxypropyl-, Ethoxybutylester der Essigsäure, der Ameisensäure, der Propionsäure oder der Buttersäure, wobei die Ethyl-, n-Propyl-, n-Butyl-, Methoxypropyl- und Ethoxypropylester bevorzugt sind. Besonders bevorzugt sind die Ethyl-, n-Propyl-, n-Butyl-, Methoxypropyl- und Ethoxypropylester der Essigsäure, insbesondere n-Butylacetat und Methoxypropylacetat. Die nach dem erfindungsgemäßen Verfahren hergestellten hochmolekularen Siliconharze eignen sich besonders gut zum Einsatz in korrosionsschützenden Zubereitungen. Insbesondere sind sie geeignet zur Verwendung zum Zwecke des Korrosionsschutzes bei hoher Temperatur.

Außer zum Zwecke des hochtemperaturbeständigen Korrosionsschutzes können die nach dem erfindungsgemäßen Verfahren hergestellten hochmolekularen Siliconharze auch zum Korrosionsschutz von Armierungsstahl in Stahlbeton eingesetzt werden, wobei die erfindungsgemäßen Verbindungen hierbei sowohl in reiner Form als auch in Zubereitungen eingesetzt werden können. Korrosionssinhibierende Effekte im Stahlbeton werden dabei sowohl dann erreicht, wenn man die erfindungsgemäß hergestellten Verbindungen oder Zubereitungen, die diese enthalten in die Betonmischung einbringt, bevor diese in Form gebracht und ausgehärtet wird, oder als auch durch Aufbringen der erfindungsgemäß hergestellten Verbindungen oder Zubereitungen, auf die Oberfläche des bereits ausgehärteten Betons aufbringt.

Außer zum Zwecke des Korrosionsschutzes auf Metallen können die nach dem erfindungsgemäßen Verfahren hergestellten hochmolekularen Siliconharze auch zur Manipulation der Eigenschaften von Zubereitungen oder deren Härtungsprodukten wie Festkörpern oder Filmen dienen wie beispielsweise:
- Steuerung des elektrischen Leitfähigkeit und des elektrischen Widerstandes
- Steuerung der Verlaufseigenschaften einer Zubereitung
- Steuerung des Glanzes eines feuchten oder gehärteten Filmes oder eines Objektes
- Erhöhung der Bewitterungsbeständigkeit
- Erhöhung der Chemikalienresistenz
- Erhöhung der Farbtonstabilität
- Reduzierung der Kreidungsneigung
- Reduzierung oder Erhöhung der Haft- und Gleitreibung auf Festkörpern oder Filmen erhalten aus Zubereitungen, die erfindungsgemäße Zubereitung enthaltend
- Stabilisierung oder Destabilisierung von Schaum in der Zubereitung, die die erfindungsgemäße Zubereitung enthält
- Verbesserung der Haftung der Zubereitung die die nach dem erfindungsgemäßen Verfahren hergestellten hochmolekularen Siliconharze enthält zu Substraten auf oder zwischen die die Zubereitung die die nach dem erfindungsgemäßen Verfahren hergestellten hochmolekularen Siliconharze enthält, aufgetragen wird,
- Steuerung des Füllstoff- und Pigmentnetz- und Dispergierverhaltens,
- Steuerung der rheologischen Eigenschaften der Zubereitung, die die nach dem erfindungsgemäßen Verfahren hergestellten hochmolekularen Siliconharze enthält,
- Steuerung der mechanischen Eigenschaften, wie z.B. Flexibilität, Kratzfestigkeit, Elastizität, Dehnbarkeit, Biegefähigkeit, Reißverhalten, Rückprallverhalten, Härte, Dichte, Weiterreißfestigkeit, Druckverformungsrest, Verhalten bei verschiedenen Temperaturen, Ausdehnungskoeffizient, Abriebfestigkeit sowie weiterer Eigenschaften wie der Wärmeleitfähigkeit, Brennbarkeit, Gasdurchlässigkeit, Beständigkeit gegen Wasserdampf, Heißluft, Chemikalien, Bewitterung und Strahlung, der Sterilisierbarkeit, von Festkörpern oder Filmen erhältlich, die die nach dem erfindungsgemäßen Verfahren hergestellten hochmolekularen Siliconharze oder diese enthaltende Zubereitung enthält
- Steuerung der elektrischen Eigenschaften, wie z.B. dielektrischer Verlustfaktor, Durchschlagfestigkeit, Dielektrizitätskonstante, Kriechstromfestigkeit, Lichtbogenbeständigkeit, Oberflächenwiderstand, spezifischer Durchschlagswiderstand,
- Flexibilität, Kratzfestigkeit, Elastizität, Dehnbarkeit, Biegefähigkeit, Reißverhalten, Rückprallverhalten, Härte, Dichte, Weiterreißfestigkeit, Druckverformungsrest, Verhalten bei verschiedenen Temperaturen von Festkörpern oder Filmen erhältlich aus der Zubereitung, die die nach dem erfindungsgemäßen Verfahren hergestellten hochmolekularen Siliconharze enthält.

Beispiele für Anwendungen, in denen die nach dem erfindungsgemäßen Verfahren hergestellten Siliconharze eingesetzt werden können, um die oben bezeichneten Eigenschaften zu manipulieren, sind die Verwendung in der Herstellung von Beschichtungsstoffen und Imprägnierungen und daraus zu erhaltenden Beschichtungen und Überzügen auf Substraten, wie Metall, Glas, Holz, mineralisches Substrat, Kunst- und Naturfasern zur Herstellung von Textilien, Teppichen, Bodenbelägen, oder sonstigen aus Fasern herstellbaren Gütern, Leder, Kunststoffe wie Folien, Formteilen. Die nach dem erfindungsgemäßen Verfahren hergestellten Siliconharze können in Zubereitungen bei entsprechender Auswahl der Zubereitungskomponenten außerdem als Additiv zum Zwecke der Entschäumung, der Verlaufsförderung, Hydrophobierung, Hydrophilierung, Füllstoff- und Pigmentdispergierung, Füllstoff- und Pigmentbenetzung, Substratbenetzung, Förderung der Oberflächenglätte, Reduzierung des Haft- und Gleitwiderstandes auf der Oberfläche der aus der additivierten Zubereitung erhältlichen ausgehärteten Masse eingesetzt werden. Die nach dem erfindungsgemäßen Verfahren hergestellten hochmolekularen Siliconharze können in flüssiger oder in ausgehärteter fester Form in Elastomermassen eingearbeitet werden. Hierbei kommen sie zum Zwecke der Verstärkung oder zur Verbesserung anderer Gebrauchseigenschaften wie der Steuerung der Transparenz, der Hitzebeständigkeit, der Vergilbungsneigung, der Bewitterungsbeständigkeit zum Einsatz. Auch ein Einsatz im Personal- und Home-Care sowie im Bereich von Produkten für medizinische Anwendungen ist nun möglich.

Alle vorstehenden Symbole der vorstehenden Formeln weisen ihre Bedeutungen jeweils unabhängig voneinander auf. In allen Formeln ist das Siliziumatom vierwertig.

### Beispiele

Im Folgenden wird das erfindungsgemäße Verfahren in Beispielen beschrieben, sie sollen jedoch nicht beschränkend für die Erfindung sein. Alle Prozentangaben beziehen sich auf das Gewicht. Falls nicht anders angegeben, werden alle Manipulationen bei Raumtemperatur von etwa 23°C und unter Normaldruck (1,013 bar) ausgeführt. Bei den Apparaten handelt es sich um handelsübliche Laborgeräte wie sie von zahlreichen Geräteherstellern käuflich angeboten werden.
Ph bedeutet einen Phenylrest = C₆H₅-
Me bedeutet einen Methylrest = CH₃-. Me₂ bedeutet entsprechend zwei Methylreste.

### Beispiel 1:

Umsetzung eines Methylphenylsiliconharzintermediates mit einem Molekulargewichtsmittel Mw von 1.800 g/mol (Zahlenmittel Mn = 900; Polydispersität 2,0) und einer Viskosität von 440 mm²/s, das 14,2 Gew.-% siliziumgebundene Methoxygruppen auf der Oberfläche trägt und das durchschnittlich aus 60 mol-% PhSiO_{3/2}-Einheiten, 36 Mol.-% MeSiO_{3/2}-Einheiten und 4 Mol.-% Me₂SiO_{2/2}-Einheiten besteht, wobei sich die Methoxygruppen auf die angegebenen Struktureinheiten verteilen in Methoxypropylacetat in Gegenwart von Wasser mit Benzyltrimethylammoniumhydroxid (BTAH):
In einen 1 1 Dreihalskolben mit Rückflusskühler und Tropftrichter werden unter Stickstoff 460,0 g des Siliconharzintermediates in 127,5 g Methoxypropylacetat gelöst und zu dieser Mischung 40,0 g vollentsalztes Wasser und 2,37 g BTAH in Methanol (40%-ige Lösung) zugegeben. Das Gemisch wird auf 80°C aufgeheizt und 2 h bei dieser Temperatur gerührt.

Danach werden flüchtige Bestandteile der Reaktionsmischung 3 h lang am Rotationsverdampfer ohne Vakuum abdestilliert, wobei die Temperatur bis auf 131°C, aber nicht darüber erhöht wird. Anschließend werden als Fitrationshilfsmittel 2,0 g DICALITE^{®} Perlite Filterhilfe 478 und 3,0 g Tonsil Optimum 214 FF (Süd Chemie) zugegeben, 30 min bei 131°C am Rotationsverdampfer gemischt und über eine Druckfilternutsche mit einer Filterschicht Seitz K 100 filtriert. Man erhält ein klares leicht gelbliches, sehr hochviskoses Produkt mit folgenden Eigenschaften:
Lösemittelgehalt: 18,1 Gew.-% Methoxypropylacetat; Methanol nur noch in einer Menge von 0,02 Gew.-% als Verunreinigung nachweisbar.
Das Produkt enthält einen Rest-Methoxygehalt von 2,2 Gew.-%. Die Methoxygruppen werden nur als (Ph)(OMe)SiO_{2/2}-Gruppen gefunden (alkoxylierte T-Einheit). Alkoxylierte D-Einheiten (Me₂(OMe)SiO_{1/2}) werden nicht mehr gefunden.
Mw = 30.300 g/mol, Mn = 2.800, Polydispersität Mw/Mn = 10,6. Das Produkt erweist sich bei Lagerung für 4 Wochen im Trockenschrank bei 60°C als viskositätsstabil.
Ein Aufzug einer Verdünnung des erhaltenen Produktes mit Methoxypropylacetat (60:40) auf einem Aluminiumpanel ergibt nach 4,5 h Lagerung bei Raumtemperatur einen klebfreien Film.

### Beispiel 2:

Umsetzung eines Methylphenylsiliconharzintermediates mit einem Molekulargewichtsmittel Mw von 1.800 g/mol (Zahlenmittel Mn = 900; Polydispersität 2,0) und einer Viskosität von 440 mm²/s, das 14,2 Gew.-% siliziumgebundene Methoxygruppen auf der Oberfläche trägt und das durchschnittlich aus 60 mol-% PhSiO_{3/2}-Einheiten, 36 Mol.-% MeSiO_{3/2}-Einheiten und 4 Mol.-% Me₂SiO_{2/2}-Einheiten besteht, wobei sich die Methoxygruppen auf die angegebenen Struktureinheiten verteilen in Methoxypropylacetat in Gegenwart von Wasser mit Salzsäure (25%-ige wässrige Lösung):
In einen 1 1 Dreihalskolben mit Rückflusskühler und Tropftrichter werden unter Stickstoff 460,0 g des Siliconharzintermediates in 127,5 g Methoxypropylacetat gelöst und zu dieser Mischung 40,0 g vollentsalztes Wasser und 0,4 g wässrige Salzsäurelösung gegeben. Das Gemisch wird auf 80°C aufgeheizt und 2 h bei dieser Temperatur gerührt.

Danach werden flüchtige Bestandteile der Reaktionsmischung 3 h lang am Rotationsverdampfer ohne Vakuum abdestilliert, wobei die Temperatur bis auf 130°C, aber nicht darüber erhöht wird. Anschließend werden zu der hochviskosen Masse 300 g Methoxypropylacetat zugegeben und als Fitrationshilfsmittel 2,0 g DICALI-TE^{®} Perlite Filterhilfe 478 und 3,0 g Tonsil Optimum 214 FF (Süd Chemie)zugesetzt. Außerdem werden 0,4 g 25%-ige wässrige Natronlaugelösung zugegeben und 30 min bei 131°C am Rotationsverdampfer gemischt. Anschließend filtriert man über eine Druckfilternutsche mit einer Filterschicht Seitz K 100 ab.

Man erhält eine klare, farblose, viskose Lösung, die man zu einem trockenen Rückstand eindampfen kann, indem man bei 120°C und 100 mbar Druck, 10 min lang ausdestilliert. Man erhält einen trüben, weichen, plastisch verformbaren nicht klebenden Rückstand, der in Methoxypropylacetat oder auch in Toluol wieder zu einer klaren Lösung löslich ist. Die Analytik weißt darin einen Methoxypropylacetatanteil von 13,5 Gew.-% aus. Der Versuch auch dieses Restlösemittel aus dem Bulk auszudestillieren wurde nicht unternommen. Der Restgehalt Methanol in dem trockenen Rückstand wurde zu 0,06 Gew.-% bestimmt. Der Restalkoxygehalt beträgt 1,1 Gew.-%. Die Methoxygruppen werden nur als (Ph)(OMe)SiO_{2/2}-Gruppen gefunden (alkoxylierte T-Einheit). Alkoxylierte D-Einheiten (Me₂(OMe)SiO_{1/2}) werden nicht mehr gefunden.

Auf einem Aluminiumpanel erhält man aus der ursprünglichen Lösung, die man nach der Filtration erhalten hatte, nach Auftragen mit einem 100 µm Rakel und Verdunsten des Lösemittels nach 5 Stunden einen trockenen, klebfreien Film.

Das Reaktionsprodukt weißt ein Molekulargewicht von Mw = 232.800 g/mol (Gewichtsmittel) bei einer Polydispersität (Mw/Mn) von 45 auf.

Die Lösung, die nach der Filtration erhalten wurde, erweist sich bei Lagerung im Trockenschrank (4 Wochen bei 60°C) als viskositätsstabil.

### Beispiel 3:

Umsetzung eines Methylphenylsiliconharzintermediates mit einem Molekulargewichtsmittel Mw von 1.030 g/mol (Zahlenmittel Mn = 730; Polydispersität 1,4) und einer Viskosität von 140 mm²/s, das 12,3 Gew.-% siliziumgebundene Methoxygruppen und 0,24 Gew.-% siliziumgebundene OH-Gruppen auf der Oberfläche trägt und das durchschnittlich aus 59 mol-% PhSiO_{3/2}-Einheiten und 41 Mol.-% Me₂SiO_{2/2}-Einheiten besteht, wobei sich die Methoxygruppen auf die angegebenen Struktureinheiten verteilen in n-Butylacetat in Gegenwart von Wasser mit Benzyltrimethylammoniumhydroxid (BTAH) und wässriger Salzsäurelösung (25%-ige Lösung):
In einen 1 1 Dreihalskolben mit Rückflusskühler und Tropftrichter werden unter Stickstoff 460,0 g des Siliconharzintermediates in 125,5 g n-Butylacetat gelöst und zu dieser Mischung 45,0 g vollentsalztes Wasser und 2,37 g BTAH in Methanol (40%-ige Lösung) und 0,2 g wässrige Salzsäurelösung zugegeben. Das Gemisch wird auf 80°C aufgeheizt und 2 h bei dieser Temperatur gerührt.

Danach werden flüchtige Bestandteile der Reaktionsmischung 6 h lang am Rotationsverdampfer ohne Vakuum abdestilliert, wobei die Temperatur bis auf 165°C, aber nicht darüber erhöht wird. Anschließend werden 0,2 g 25%-ige Natronlaugelösung und als Fitrationshilfsmittel 2,0 g DICALITE^{®} Perlite Filterhilfe 478 und 3,0 g Tonsil Optimum 214 FF (Süd Chemie)zugegeben, 30 min bei 165°C am Rotationsverdampfer gemischt, danach 200 g n-Butylacetat zugegeben und über eine Druckfilternutsche mit einer Filterschicht Seitz K 100 filtriert. Man erhält eine klare, leicht gelbliche Lösung. Das Lösemittel lässt sich weitgehend entfernen, indem man bei 160°C und 10 mbar 30 min ausdestilliert. Es verbleiben dabei etwa 5 Gew.-% Butylacetat in dem hochviskosen Rückstand. Das so erhaltene Produkt ist in n-Butylacetat wieder leicht löslich. Methanol ist nur noch in einer Menge von 0,03 Gew.-% als Verunreinigung nachweisbar.
Das Produkt enthält einen Rest-Methoxygehalt von 1,9 Gew.-%. Viskosität des ausdestillierten Rückstandes: 50.800 mm²/s
Mw = 30.700 g/mol, Mn = 2.900, Polydispersität Mw/Mn = 10,5.

Das Produkt erweist sich bei Lagerung im Trockenschrank für 4 Wochen bei 60°C als viskositätsstabil.
Ein Aufzug einer Verdünnung des erhaltenen Produktes mit n-Butylacetat (60:40) und 1 Gew.-% Umesterungskatalysator Tyzor^{®} Pita (Titanethylacetoacetat Komplex; DuPont) auf einem Aluminiumpanel ergibt nach 3,5 h Lagerung bei Raumtemperatur einen klebfreien Film.

### Beispiel 4:

Umsetzung eines Methylphenylsiliconharzintermediate Gemisches aus gleichen Gewichtsanteilen zweier Siliconharzintermediate, wobei das eine ein Siliconharzintermediat ist mit einem Molekulargewichtsmittel Mw von 1.030 g/mol (Zahlenmittel Mn = 730; Polydispersität 1,4) und einer Viskosität von 140 mm²/s, das 12,3 Gew.-% siliziumgebundene Methoxygruppen und 0,24 Gew.-% siliziumgebundene OH-Gruppen auf der Oberfläche trägt und das durchschnittlich aus 59 mol-% PhSiO_{3/2}-Einheiten und 41 Mol.-% Me₂SiO_{2/2}-Einheiten besteht, wobei sich die Methoxygruppen auf die angegebenen Struktureinheiten verteilen. Das zweite ist ein Methylphenylsiliconharzintermediate mit einem Molekulargewichtsmittel Mw von 1.800 g/mol (Zahlenmittel Mn = 900; Polydispersität 2,0) und einer Viskosität von 440 mm²/s, das 14,2 Gew.-% siliziumgebundene Methoxygruppen auf der Oberfläche trägt und das durchschnittlich aus 60 mol-% PhSiO_{3/2}-Einheiten, 36 Mol.-% MeSiO_{3/2}-Einheiten und 4 Mol.-% Me₂SiO_{2/2}-Einheiten besteht, wobei sich die Methoxygruppen auf die angegebenen Struktureinheiten verteilen, in Methoxypropylacetat in Gegenwart von Wasser mit Benzyltrimethylammoniumhydroxid (BTAH; 40%-ige Lösung in Methanol):
In einen 1 1 Dreihalskolben mit Rückflusskühler und Tropftrichter werden unter Stickstoff jeweils 230,0 g der beiden Siliconharzintermediates mit 127,5 g Methoxypropylacetat vermischt und zu dieser Mischung 40,0 g vollentsalztes Wasser und 2,37 g BTAH in Methanol (40%-ige Lösung) zugegeben. Das Gemisch wird auf 80°C aufgeheizt und 2 h bei dieser Temperatur gerührt. Danach werden 0,2 g 25%-ige, wässrige Salzsäurelösung dazugegeben.

Anschließend werden flüchtige Bestandteile aus der Reaktionsmischung 6 h lang am Rotationsverdampfer ohne Vakuum abdestilliert, wobei die Temperatur bis auf 131°C, aber nicht darüber erhöht wird. Anschließend werden als Fitrationshilfsmittel 2,0 g DICALITE^{®} Perlite Filterhilfe 478 und 3,0 g Tonsil Optimum 214 FF (Süd Chemie) zugegeben, 30 min bei 131°C am Rotationsverdampfer gemischt und über eine Druckfilternutsche mit einer Schicht Filter Seitz K 100 filtriert. Man erhält eine klare, farblose Lösung, die 16,9 Gew.-% Methoxypropanol enthält. Methanol ist nur noch in einer Menge von 0,03 Gew.-% als Verunreinigung nachweisbar.

Das Produkt weißt einen Rest-Methoxygehalt von 5,8 Gew.-% auf. Mw = 42.500 g/mol, Mn = 2200, Polydispersität Mw/Mn = 19,7.

Das Produkt erweist sich bei Lagerung im Trockenschrank für 4 Wochen bei 60°C als viskositätsstabil.

Ein Aufzug einer Verdünnung des erhaltenen Produktes mit Methoxypropanol (60:40) und 1 Gew.-% Umesterungskatalysator Tyzor^{®} Pita (Titanethylacetoacetat Komplex; DuPont) auf einem Aluminiumpanel ergibt nach 3,5 h Lagerung bei Raumtemperatur einen klebfreien Film.

### Beispiel 5:

### Vergleichsbeispiel: Versuch der Synthese eines hochmolekularen Siliconharzes in einem nicht aromatischen und nicht alkoholischen Lösemittel gemäß der Vorgehensweise in DE 4128893 A1

Umsetzung eines Methylphenylsiliconharzintermediates mit einem Molekulargewichtsmittel Mw von 1.030 g/mol (Zahlenmittel Mn = 730; Polydispersität 1,4) und einer Viskosität von 140 mm²/s, das 12,3 Gew.-% siliziumgebundene Methoxygruppen und 0,24 Gew.-% siliziumgebundene OH-Gruppen auf der Oberfläche trägt und das durchschnittlich aus 59 mol-% PhSiO_{3/2}-Einheiten und 41 Mol.-% Me₂SiO_{2/2}-Einheiten besteht, wobei sich die Methoxy- und die OH-Gruppen auf die angegebenen Struktureinheiten verteilen, in Aceton in Gegenwart von Wasser mit Benzyltrimethylammoniumhydroxid (BTAH; 40%-ige Lösung in Methanol):
In einen 1 1 Dreihalskolben mit Rückflusskühler und Tropftrichter und KPG-Rührer werden unter Stickstoff 150 g des Siliconharzintermediates in 50 g Aceton mit 5,8 g Wasser und 0,77 g BTAH versetzt, das in Methanol gelöst wurde. Dann wurde 1 h auf Rückfluss erhitzt (60 - 62°C). Die erhaltene Lösung war klar, farblos und flüssig. Anschließend wurde begonnen ohne Vakuum die flüchtigen Bestandteile abzudestillieren. Dabei stieg die Temperatur auf 75°C an und es bildete sich ein zähes hochviskoses Produkt, das sich am Rührer hochzog, so dass der Vorgang abgebrochen werden musste. Zu dieser Zeit waren 46 g Destillat erhalten worden. Das so entstandene transparente, farbloses Produkt ist nicht mehr in Aceton, Alkoholen, Toluol oder Xylol löslich.

### Beispiel 6:

### Vergleichsbeispiel: Versuch der Synthese eines hochmolekularen Siliconharzes in einem nicht aromatischen und nicht alkoholischen Lösemittel gemäß der Vorgehensweise in DE 4128893 A1

Umsetzung eines Methylphenylsiliconharzintermediates mit einem Molekulargewichtsmittel Mw von 1.030 g/mol (Zahlenmittel Mn = 730; Polydispersität 1,4) und einer Viskosität von 140 mm²/s, das 12,3 Gew.-% siliziumgebundene Methoxygruppen und 0,24 Gew.-% siliziumgebundene OH-Gruppen auf der Oberfläche trägt und das durchschnittlich aus 59 mol-% PhSiO_{3/2}-Einheiten und 41 Mol.-% Me₂SiO_{2/2}-Einheiten besteht, wobei sich die Methoxy- und die OH-Gruppen auf die angegebenen Struktureinheiten verteilen, in Tetrahydrofuran (THF) in Gegenwart von Wasser mit Benzyltrimethylammoniumhydroxid (BTAH; 40%-ige Lösung in Methanol):
In einen 1 1 Dreihalskolben mit Rückflusskühler und Tropftrichter und KPG-Rührer werden unter Stickstoff 150 g des Siliconharzintermediates in 50 g THF mit 5,8 g Wasser und 0,77 g BTAH versetzt, das in Methanol gelöst wurde. Dann wurde 1 h auf Rückfluss erhitzt (61 - 63°C). Die erhaltene Lösung war klar, farblos und flüssig. Anschließend wurde begonnen ohne Vakuum die flüchtigen Bestandteile abzudestillieren. Dabei stieg die Temperatur bis auf 76°C an und es bildete sich ein zähes hochviskoses Produkt, das sich am Rührer hochzog, so dass der Vorgang abgebrochen werden musste. Zu dieser Zeit waren 40 g Destillat erhalten worden. Das so entstandene nahezu transparente, farblose Produkt ist nicht mehr in Aceton, Alkoholen, Toluol oder Xylol löslich.

### Beispiel 7:

### Vergleichsbeispiel: Versuch der Synthese eines hochmolekularen Siliconharzes in einem nicht aromatischen und nicht alkoholischen Lösemittel gemäß der Vorgehensweise in DE 4128893 A1

Umsetzung eines Methylphenylsiliconharzintermediates mit einem Molekulargewichtsmittel Mw von 1.030 g/mol (Zahlenmittel Mn = 730; Polydispersität 1,4) und einer Viskosität von 140 mm²/s, das 12,3 Gew.-% siliziumgebundene Methoxygruppen und 0,24 Gew.-% siliziumgebundene OH-Gruppen auf der Oberfläche trägt und das durchschnittlich aus 59 mol-% PhSiO_{3/2}-Einheiten und 41 Mol.-% Me₂SiO_{2/2}-Einheiten besteht, wobei sich die Methoxy- und die OH-Gruppen auf die angegebenen Struktureinheiten verteilen, in n-Hexan in Gegenwart von Wasser mit Benzyltrimethylammoniumhydroxid (BTAH; 40%-ige Lösung in Methanol):
In einen 1 1 Dreihalskolben mit Rückflusskühler und Tropftrichter und KPG-Rührer werden unter Stickstoff 150 g des Siliconharzintermediates in 50 g n-Hexan mit 5,8 g Wasser und 0,77 g BTAH versetzt, das in Methanol gelöst wurde. Dann wurde 1 h auf Rückfluss erhitzt (70°C). Die erhaltene Lösung war weißlich trüb. Anschließend wurde begonnen ohne Vakuum die flüchtigen Bestandteile abzudestillieren. Dabei stieg die Temperatur bis auf 74°C an und es bildete sich ein zähes hochviskoses Produkt, das sich am Rührer hochzog, so dass der Vorgang abgebrochen werden musste. Zu dieser Zeit waren 42 g Destillat erhalten worden. Das so entstandene nahezu transparente, farblose Produkt ist nicht mehr in Aceton, Alkoholen, Toluol oder Xylol löslich.

### Beispiel 8:

### Vergleichsbeispiel: Synthese eines Siliconharzes in Xylol gemäß der Vorgehensweise in DE 4128893 A1.

Umsetzung eines Methylphenylsiliconharzintermediates mit einem Molekulargewichtsmittel Mw von 1030 g/mol (Zahlenmittel Mn = 730; Polydispersität 1,4) und einer Viskosität von 140 mm²/s, das 12,3 Gew.-% siliziumgebundene Methoxygruppen und 0,24 Gew.-% siliziumgebundene OH-Gruppen auf der Oberfläche trägt und das durchschnittlich aus 59 mol-% PhSiO_{3/2}-Einheiten und 41 Mol.-% Me₂SiO_{2/2}-Einheiten besteht, wobei sich die Methoxy- und die OH-Gruppen auf die angegebenen Struktureinheiten verteilen, in n-Hexan in Gegenwart von Wasser mit Benzyltrimethylammoniumhydroxid (BTAH; 40%-ige Lösung in Methanol):
In einen 1 1 Dreihalskolben mit Rückflusskühler und Tropftrichter und KPG-Rührer werden unter Stickstoff 150 g des Siliconharzintermediates in 50 g Xylol mit 5,8 g Wasser und 0,77 g BTAH versetzt, das in Methanol gelöst wurde. Dann wurde 1 h auf Rückfluss erhitzt (142°C). Die erhaltene Lösung war klar und farblos. Anschließend wurden ohne Vakuum 42 g flüchtige Bestandteile abdestilliert. Dabei stieg die Temperatur bis auf 157°C an. Die resultierende klare Produktlösung wies einen Festgehalt von 83% auf und wurde durch Zugabe von Butanol auf 80% eingestellt.

## Patentansprüche

1. Verfahren zur Herstellung von Siliconharzen mit einem Molekulargewicht ausgedrückt als Gewichtsmittel Mw von mindestens 5.000 g/mol und einer Polydispersität von höchstens 65, das **dadurch gekennzeichnet ist, dass**
(A) siliziumgebundenes alkoxygruppentragendes Siliconharzintermediat oder siliziumgebundenes alkoxygruppen- und hydroxygruppentragendes Siliconharzintermediat oder deren Mischungen mit
(C) einem der Mischung Basizität oder Azidität verleihenden basischen oder sauren Katalysator oder sich nicht gegenseitig völlig neutralisierende Mischungen aus solchen Katalysatoren und
(D) Wasser und
(E) einem aliphatischen Carbonsäureester als alleinigem Prozesslösemittel hydrolysiert und kondensiert werden,
mit den Maßgaben, dass
I) der entstehende Alkohol aus dem Reaktionsgemisch abdestilliert wird, und
II) der Katalysator (C) inaktiviert wird durch thermische Behandlung oder durch Neutralisation über die Zugabe einer äquivalenten Menge Säure oder Base, und
III) ein Teil von (E) zur Viskositätseinstellung und Lösung des sich bildenden Siliconharzes im Endprodukt verbleibt.

2. Verfahren nach Anspruch 1, **dadurch gekennzeichnet, dass** die Umsetzung zusätzlich erfolgt mit
(B) alkoxyfunktionellem Silan oder einer Mischung aus alkoxyfunktionellen Silanen oder einer Mischung mit deren Hydrolyse und/oder Kondensationsprodukten.

3. Verfahren nach Anspruch 1 oder 2, **dadurch gekennzeichnet, dass** (C) eine quarternäre Ammonium- und/oder Phosphoniumverbindung ist.

4. Verfahren nach Anspruch 1 oder 2 oder 3, **dadurch gekennzeichnet, dass** (E) der allgemeinen Formel (5) entspricht
R⁸C(=O)OR⁹, (5)
wobei R⁸ gleiche oder verschiedene einwertige lineare oder verzweigte C₁-C₃₀-Alkylreste, C₁-C₃₀-Alkenylreste oder Wasserstoff bedeutet, wobei nicht benachbarte Kohlenstoffatome in den C₁-C₃₀-Alkylresten durch Sauerstoffatome ersetzt sein können,
und R⁹ unabhängig von R⁸ die gleiche Bedeutung wie R⁸ hat, mit der Einschränkung, dass R⁹ kein Wasserstoffatom bedeuten kann.

## Claims

1. Process which can produce silicone resins with a molar mass, expressed as weight average Mw, of at least 5000 g/mol and with a polydispersity of at most 65, and which is **characterized in that**
(A) silicon-bonded alkoxylated silicone resin intermediate or silicon-bonded alkoxylated and hydroxylated silicone resin intermediate, or a mixture of these, is hydrolyzed and condensed with
(C) a basic or acidic catalyst that provides basicity or acidity to the mixture, or a mixture of such catalysts which is not completely selfneutralizing, and
(D) with water, and
(E) with an aliphatic carboxylic ester as sole process solvent,
with the provisos that
I) the resultant alcohol is removed from the reaction mixture by distillation, and
II) the catalyst (C) is deactivated by thermal treatment or by neutralization by way of the addition of an equivalent amount of acid or base, and
III) a portion of (E) remains in the final product for viscosity adjustment and solution of the silicone resin that forms.

2. Process according to Claim 1, **characterized in that** the reaction also uses
(B) alkoxy-functional silane or a mixture of alkoxy-functional silanes, or a mixture with hydrolysis and/or condensation products thereof.

3. Process according to Claim 1 or 2, **characterized in that** (C) is a quaternary ammonium and/or phosphonium compound.

4. Process according to Claim 1 or 2 or 3, **characterized in that** (E) corresponds to the general formula (5)
R⁸C(=O)OR⁹, (5)
where R⁸ is identical or different monovalent linear or branched C₁-C₃₀-alkyl moieties, C₁-C₃₀-alkenyl moieties, or hydrogen, where oxygen atoms can replace non-adjacent carbon atoms in the C₁-C₃₀-alkyl moieties,
and R⁹, independently of R⁸, is as defined for R⁸, with the restriction that R⁹ cannot be a hydrogen atom.

## Revendications

1. Procédé pour la préparation de résines siliconées présentant un poids moléculaire M_{w}, exprimé comme moyenne pondérale, d'au moins 5000 g/mole et une polydispersité d'au plus 65, qui est **caractérisé en ce qu'**on hydrolyse et on condense
(A) un intermédiaire de résine siliconée lié par silicium portant des groupes alcoxy ou un intermédiaire de résine siliconée lié par silicium portant des groupes alcoxy et hydroxy ou leurs mélanges avec
(C) un catalyseur basique ou acide conférant de la basicité ou de l'acidité au mélange ou des mélanges ne se neutralisant pas complètement mutuellement de ces catalyseurs et
(D) de l'eau et
(E) un ester d'acide carboxylique aliphatique comme unique solvant de procédé
à condition que
I) l'alcool qui se forme soit éliminé par distillation du mélange réactionnel est
II) le catalyseur (C) soit inactivé par traitement thermique ou par neutralisation via l'addition d'une quantité équivalente d'acide ou de base et
III) une partie de (E) reste dans le produit final pour le réglage de la viscosité et la dissolution de la résine siliconée qui se forme.

2. Procédé selon la revendication 1, **caractérisé en ce que** la transformation se produit en outre avec (B) un silane à fonctionnalité alcoxy ou un mélange de silanes à fonctionnalité alcoxy ou un mélange avec leurs produits d'hydrolyse et/ou de condensation.

3. Procédé selon la revendication 1 ou 2, **caractérisé en ce que** (C) est un composé d'ammonium et/ou de phosphonium quaternaire.

4. Procédé selon la revendication 1 ou 2 ou 3, **caractérisé en ce que** (E) correspond à la formule générale (5)
R⁸C(=O)OR⁹, (5)
R⁸ signifiant des radicaux C₁-C₃₀-alkyle, des radicaux C₁-C₃₀-alcényle identiques ou différents, monovalents, linéaires ou ramifiés ou hydrogène, des atomes de carbone non adjacents dans les radicaux C₁-C₃₀-alkyle pouvant être remplacés par des atomes d'oxygène,
et R⁹ présentant, indépendamment de R⁸, la même signification que R⁸, avec comme limite que R⁹ ne peut pas signifier un atome d'hydrogène.
